# EUROPÄISCHE PATENTSCHRIFT

(11) **EP 0 639 441 B1**
(45) Veröffentlichungstag und Bekanntmachung des Hinweises auf die Patenterteilung: **15.04.1998**
(21) Anmeldenummer: 94112195.6
(22) Anmeldetag: 04.08.1994
(51) Int. Cl.: B29C 44/42, B29C 37/00

(54) **Verfahren und Vorrichtung zum Ausschäumen von Gehäusen mit FCKW-freien Polyurethan-Schaumstoffen**
Method and apparatus for foam filling housings with CFC-free polyurethane foams
Procédé et dispositif de remplissage des cuves de mousse polyuréthane sans CFC

(30) Priorität: 17.08.1993 DE 4327569
(43) Veröffentlichungstag der Anmeldung: 22.02.1995
(73) Patentinhaber: Hennecke GmbH, 51379 Leverkusen (DE)
(72) Erfinder: Althausen, Ferdinand, D-53819 Neunkirchen-Seelscheid (DE); Duschanek, Helmut, Dipl.-Ing., D-53639 Königswinter (DE); Büchel, Bodo, Dipl.-Ing., D-53639 Königswinter (DE); Pieper, Kurt, Dipl.-Ing., D-53844 Troisdorf (DE); Kraft, Werner, D-53604 Bad Honnef (DE)
(74) Vertreter: Kirchner, Dietrich, Dr.

(56) Entgegenhaltungen:
- EP-A- 0 196 345
- EP-A- 0 363 948
- DE-A- 1 778 104
- GB-A- 1 059 302
- DATABASE WPI Section Ch, Week 9220, Derwent Publications Ltd., London, GB; Class A12, AN 92-164622 HERCULES INC 'Mechanical poppets for inerting and venting closed moulds - for prodn. of parts by reaction injection moulding' & RESEARCH DISCLOSURE, Bd.336, Nr.096, 10. April 1992, EMSWORTH, GB Seite 307, XP305031 HERCULES INCORPORATED 'Mechanical poppets for inerting and venting closed moulds'

## Beschreibung

Die Erfindung betrifft ein Verfahren und eine Vorrichtung zum Ausschäumen von Gehäusen mit FCKW-freien Polyurethan-Schaumstoffen unter Eindosieren eines ein beim Verdampfen mit Luftsauerstoff gegebenenfalls explosives Gemisch bildenden Treibmittels, wie z. B. Pentan, Butan, Hexan, in mindestens eine der Reaktionskomponenten.

Beim Ausschäumen von Gehäusen, insbesondere Kühlschrankgehäusen, tritt das Problem auf, daß das beim Aufschäumen im Inneren des Gehäuses freiwerdende Treibmittel mit dem im Gehäuse vorhandenen Luftsauerstoff ein explosives Gemisch bilden kann. Da die Gefahr besteht, daß sich das Gehäuse, bzw. bei Kühlschrankgehäusen der sogenannte Innenliner, statisch aufladen kann, kann es zu einer Büschelentladung und damit zur Explosion kommen.

Es sind bereits Vorschläge bekannt geworden, den Innenliner durch eine Beschichtung elektrisch leitfähig zu machen, um elektrostatische Aufladungen durch Erdung zu vermeiden. Eine weitere Methode wäre das Spülen des gesamten auszuschäumenden Raumes mit ionisierter Luft, um elektrostatische Aufladungen abzubauen. Beide Methoden sind jedoch zu kompliziert und zu aufwendig.

Es besteht die Aufgabe, eine einfache und kostengünstige, produktionsgerechte Lösung zu finden, um beim Ausschäumen von Gehäusen, insbesondere Kühlschrankgehäusen mit Innenliner, einen Explosionsschutz sicherzustellen.

Diese Aufgabe wird dadurch gelöst, daß vor dem Einbringen des Reaktionsgemisches in den auszuschäumenden Raum Inertgas über ein servogesteuertes Einlaßventil in diesen Raum eingebracht wird.

Dadurch wird erreicht, daß das beim Aufschäumen freiwerdende Treibmittel durch die Anwesenheit von Inertgas, wie Stickstoff, nicht mehr zündfähig ist.

Um noch größere Sicherheit zu erlangen, wird vorzugsweise auch nach dem Einbringen des Reaktionsgemisches Inertgas in den auszuschäumenden Raum eingebracht, bis die aufsteigende Schäumfront die Eingabestelle erreicht hat.

Durch das Einbringen von Inertgas während und nach dem Einbringen des Reaktionsgemisches wird der auszuschäumende Raum gespült, so daß eine zündfähige Konzentration des immer noch freiwerdenden Treibmittels sicher vermieden wird.

Der Druck des Inertgases in dem auszuschäumenden Raum entspricht etwa Atmosphärendruck, gegebenenfalls geringfügig erhöht, um eine Strömung aufrechtzuerhalten.

In vorteilhafter Weise wird das Inertgas an der höchsten Stelle des auszuschäumenden Raumes eingebracht.

Auf diese Weise gelingt es, Inertgas möglichst lange einzuführen.

Die neue Vorrichtung geht aus von einer Stützform und einem Mischkopf.

Das Neue ist in einem in den auszuschäumenden Raum öffnenden, servogesteuerten Einlaßventil für Inertgas zu sehen.

Aus EP 0 196 345 B1 ist es zwar bekannt, Inertgas in die Mischkammer eines Mischkopfes einzubringen. Hier soll das Inertgas dazu dienen, die Zellen des Schaumstoffes sofort zu füllen und die Zellwände am Schrumpfen zu hindern. Das Inertgas soll also in den Schaumstoff eingelagert werden. Dementsprechend wird das Inertgas während des Schusses eingegeben. Auf das Ausschäumen von Gehäusen und die Problematik durch elektrische Aufladungen nimmt dieses Dokument keinen Bezug.

Vorzugsweise ist das Einlaßventil an der höchsten Stelle des auszuschäumenden Raumes angeordnet.

Das Einlaßventil ist am Mischkopf oder alternativ an der Stützform angeordnet.

Vorzugsweise sind mindestens zwei Einlaßventile vorgesehen.

Dies hat den Vorteil, daß man beispielsweise ein Einlaßventil am Mischkopf und eines an der Stützform in verschiedenen Höhen anordnen kann.

In der Zeichnung ist die neue Vorrichtung in zwei Ausführungsbeispielen rein schematisch dargestellt und nachstehend näher erläutert. Es zeigen:
- Fig. 1: die Vorrichtung zum Ausschäumen eines Kühlschrankgehäuses mit der Türöffnung nach oben,
- Fig. 2: die Vorrichtung zum Ausschäumen eines Kühlschrankgehäuses mit der Türöffnung nach unten,
- Fig. 3: eine erste Ausführungsform einer Einlaßdüse in Öffnungsstellung,
- Fig. 4: die Einlaßdüse gemäß Fig. 3 in Schließstellung,
- Fig. 5: eine zweite Ausführungsform der Einlaßdüse in Öffnungsstellung und
- Fig. 6: die Einlaßdüse gemäß Fig. 5 in Schließstellung.

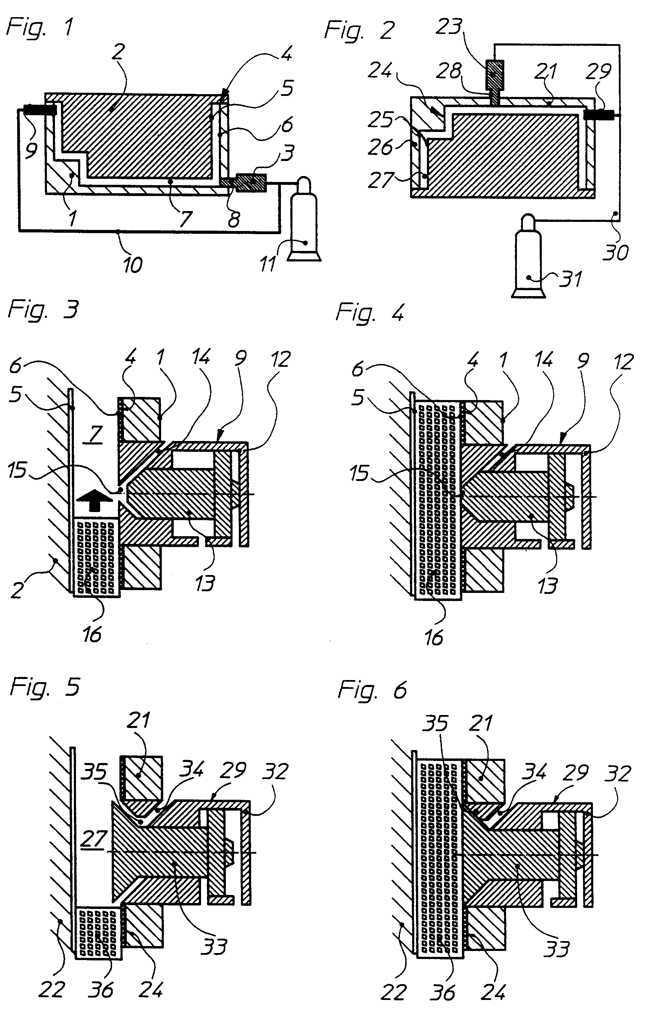

In an Fig. 1 besteht die Vorrichtung aus einer Stützform 1 mit Kern 2 und einem Mischkopf 3. In dieser Stützform 1 befindet sich ein Kühlschrankgehäuse 4, bestehend aus einem Innenliner 5 und einem Außenliner 6, zwischen denen ein auszuschäumender Raum 7 vorhanden ist. Der Mischkopf 3 ist ein üblicher Ausstoßkolbenmischkopf. Er ist jedoch mit einer Einlaßdüse 8 für Inertgas kombiniert, wie sie in Fig. 3, 4 dargestellt ist. Eine weitere Einlaßdüse 9 für Inertgas der gleichen Bauart mündet in den obersten Bereich des Raumes 7. Die beiden Einlaßdüsen 8, 9 sind über eine Leitung 10 mit einer Inertgasquelle 11 verbunden.

In Fig. 2 besteht die Vorrichtung aus einer Stützform 21 mit Kern 22 und einem Mischkopf 23. In dieser Stützform 21 befindet sich ein Kühlschrankgehäuse 24, bestehend aus einem Innenliner 25 und einem Außenliner 26, zwischen denen ein auszuschäumener Raum 27 vorhanden ist. Der Mischkopf 23 ist ein üblicher Ausstoßkolbenmischkopf. Er ist jedoch mit einer Einlaßdüse 28 für Inertgas kombiniert, wie sie in den Fig. 5, 6 dargestellt ist. Eine weitere Einlaßdüse 29 der gleichen Bauart mündet ebenfalls im oberen Bereich des Raumes 27 ein. Beide Einlaßdüsen 28, 29 sind über eine Leitung 30 mit einer Inertgasquelle verbunden.

In Fig. 3, 4 besteht die Einlaßdüse 9 aus einem Gehäuse 12 mit hydraulisch steuerbarer, in Ausströmrichtung schließender Düsennadel 13, Einströmkanal 14 und Düsenöffnung 15. Die Düsenöffnung 15 liegt in der Wandung der Stützform 1 und öffnet in den auszuschäumenden Raum 7 des Kühlschrankgehäuses 4, welches auch durch den Kern 2 abgestützt ist und aus dem Innenliner 5 und dem Außenliner 6 besteht. Die Düsennadel 13 befindet sich in Fig. 3 in Öffnungsstellung und der entstehende Schaumstoff 16 ist im Raum 7 bis kurz unterhalb der Düsenöffnung 15 aufgeschäumt. Fig. 4 zeigt die Einlaßdüse 9 in Schließstellung und der Raum 7 ist vom Schaumstoff 16 bereits ausgefüllt.

In Fig. 5, 6 besteht die Einlaßdüse 29 aus einem Gehäuse 32 mit hydraulisch steuerbarer, in Ausströmrichtung öffnender Düsennadel 33, Einströmkanal 34 und Düsenöffnung 35. Die Düsenöffnung 35 liegt in der Wandung der Stützform 21 und öffnet in den auszuschäumenden Raum 27 des Kühlschrankgehäuses 24, welches auch durch den Kern 22 abgestützt ist und aus dem Innenliner 25 und dem Außenliner 26 besteht. Die Düsennadel 33 befindet sich in Fig. 5 in der Öffnungsstellung und der entstehende Schaumstoff 36 ist im Raum 27 bis kurz unterhalb der Düsenöffnung 35 aufgeschäumt. Fig. 6 zeigt die Einlaßdüse 29 in Schließstellung und der Raum 27 ist vom Schaumstoff 36 bereits ausgefüllt.

## Patentansprüche

1. Verfahren zum Ausschäumen von Gehäusen (4, 24) mit FCKW-freien Polyurethan-Schaumstoffen unter Eindosieren eines ein beim Verdampfen mit Luftsauerstoff gegebenenfalls explosives Gemisch bildenden Treibmittels, wie z. B. Pentan, Butan, Hexan, in mindestens eine der Reaktionskomponenten, dadurch gekennzeichnet, daß vor dem Einbringen des Reaktionsgemisches in den auszuschäumenden Raum (7, 27) des Gehäuses Inertgas über ein servogesteuertes Einlaßventil (8; 9, 28; 29) in diesen Raum (7, 27) eingebracht wird.

2. Verfahren nach Anspruch 1, dadurch gekennzeichnet, daß auch nach dem Einbringen des Reaktionsgemisches in den auszuschäumenden Raum (7, 27) des Gehäuses Inertgas in diesen Raum (7, 27) eingebracht wird, bis die aufsteigende Schäumfront die Eingabestelle erreicht hat.

3. Verfahren nach Anspruch 1 oder 2, dadurch gekennzeichnet, daß das Inertgas an der höchsten Stelle des auszuschäumenden Raumes (7, 27) des Gehäuses eingebracht wird.

4. Vorrichtung zum Ausschäumen von Gehäusen (4, 24), bestehend aus einer Stützform (1, 21), in der sich das Gehäuse befindet, und einem Mischkopf (3, 23), gekennzeichnet durch ein in den auszuschäumenden Raum (7, 27) des Gehäuses öffnendes, servogesteuertes Einlaßventil (8; 9, 28; 29) für Inertgas.

5. Vorrichtung nach Anspruch 4, dadurch gekennzeichnet, daß das Einlaßventil (9, 29) an der höchsten Stelle des auszuschäumenden Raumes (7, 27) des Gehäuses angeordnet ist.

6. Vorrichtung nach Anspruch 4 oder 5, dadurch gekennzeichnet, daß das Einlaßventil (8, 28) am Mischkopf (3, 23) angeordnet ist.

7. Vorrichtung nach Anspruch 4 oder 5, dadurch gekennzeichnet, daß das Einlaßventil (9, 29) an der Stützform (1, 21) angeordnet ist.

8. Vorrichtung nach einem der Ansprüche 4 bis 7, dadurch gekennzeichnet, daß mindestens zwei Einlaßventile (8; 28, 9; 29) vorgesehen sind.

## Claims

1. A method of foaming casings (4, 24) with CFC-free polyurethane foams by adding a blowing agent, preferably pentane, butane, hexane, forming a potentially explosive mixture with atmospheric oxygen during evaporation, to at least one of the reaction components, characterised in that, before introduction of the reaction mixture into the space (7, 27) to be foamed, inert gas is introduced into said space (7, 27) via a servo-controlled inlet valve (8; 9, 28; 29).

2. A method according to claim 1, characterised in that, even after the introduction of the reaction mixture into the space (7, 27) to be foamed, inert gas is introduced into said space (7, 27) until the rising front of foam has reached the point of entry.

3. A method according to claim 1 or 2, characterised in that the inert gas is introduced at the highest point of the space to be foamed (7, 27).

4. A device for foaming casings (4, 24), consisting of a supporting mould (1, 21) in which the casing is situated, and a mixing head (3, 23) , characterised by a servo-controlled inlet valve (8; 9, 28; 29) for inert gas, opening into the space (7, 27) to be foamed.

5. A device according to claim 4, characterised in that the inlet valve (9, 29) is arranged at the highest point of the space (7, 27) to be foamed.

6. A device according to claim 4 or 5, characterised in that the inlet valve (8, 28) is arranged on the mixing head (3, 23).

7. A device according to claim 4 or 5, characterised in that the inlet valve (9, 29) is arranged on the supporting mould (1, 21).

8. A device according to one of claims 4 to 7, characterised in that at least two inlet valves (8; 28, 9; 29) are provided.

## Revendications

1. Procédé de remplissage de boîtiers (4, 24) avec des mousses de polyuréthanne sans CFC en ajoutant à l'une au moins des composantes réactionnelles de façon dosée un agent propulseur, comme par exemple du pentane, du butane, de l'hexane, formant avec l'oxygène de l'air un mélange éventuellement explosif lors de la vaporisation, caractérisé en ce que l'on introduit du gaz inerte dans l'espace (7, 27) à remplir de mousse, avant l'introduction du mélange réactionnel dans cet espace (7, 27) du boîtier, via une valve d'entrée à servocommande (8 ; 9, 28 ; 29).

2. Procédé selon la revendication 1, caractérisé en ce que l'on introduit dans l'espace à remplir de mousse (7, 27) du boîtier, également après avoir introduit le mélange réactionnel, du gaz inerte dans cet espace (7, 27), jusqu'à ce que le front de mousse montant ait atteint l'emplacement d'entrée.

3. Procédé selon l'une ou l'autre des revendications 1 et 2, caractérisé en ce que le gaz inerte est introduit à l'emplacement le plus haut de l'espace à remplir de mousse (7, 27) du boîtier.

4. Dispositif pour remplir des boîtiers (4, 24) avec de la mousse, constitué par un moule de support (1, 21) dans lequel se trouve le boîtier, et par une tête de mélange (3, 23), caractérisé par une valve d'entrée à servocommande (8 ; 9, 28 ; 29) pour du gaz inerte, qui s'ouvre dans l'espace à remplir (7, 27) du boîtier.

5. Dispositif selon la revendication 4, caractérisé en ce que la valve d'entrée (9, 29) est agencée à l'emplacement le plus haut de l'espace à remplir de mousse (7, 27) du boîtier.

6. Dispositif selon l'une ou l'autre des revendications 4 et 5, caractérisé en ce que la valve d'entrée (8, 28) est agencée sur la tête de mélange (3, 23).

7. Dispositif selon l'une ou l'autre des revendications 4 et 5, caractérisé en ce que la valve d'entrée (9, 29) est agencée sur le moule de support (1, 21).

8. Dispositif selon l'une quelconque des revendications 4 à 7, caractérisé en ce qu'il est prévu au moins deux valves d'entrée (8 ; 28, 9 ; 29).
